# EUROPÄISCHE PATENTSCHRIFT

(11) **EP 3 938 169 B1**
(45) Veröffentlichungstag und Bekanntmachung des Hinweises auf die Patenterteilung: **11.05.2022**
(21) Anmeldenummer: 20712925.5
(22) Anmeldetag: 19.03.2020
(51) Int. Cl.: B29C 48/495, B29C 48/255, B29C 48/92, B29C 48/25, F16K 11/083, F16K 11/085, F16K 11/07

(54) **VERTEILERBLOCK**
DISTRIBUTION BLOCK
BLOC DE DISTRIBUTEUR

(30) Priorität: 20.03.2019 AT 502452019
(43) Veröffentlichungstag der Anmeldung: 19.01.2022
(73) Patentinhaber: Collin Lab & Pilot Solutions GmbH, 83558 Maitenbeth (DE)
(72) Erfinder: KASTNER, Friedrich, 4710 Grieskirchen (AT)
(74) Vertreter: Lederer, Thomas L.
(86) Internationale Anmeldenummer: PCT/EP2020/057540
(87) Internationale Veröffentlichungsnummer: WO 2020/188013

(56) Entgegenhaltungen:
- EP-A1- 3 308 939
- DE-A1-102005 007 102
- JP-A- S61 273 924
- US-A1- 2012 073 687

## Beschreibung

Die Erfindung betrifft einen Verteilerblock für Extrusionsschmelze und ein Verfahren zum Coextrudieren von Folien mit Hilfe eines Verteilerblock für Extrusionsschmelze.

Gattungsgemäße Verteilerblöcke werden zum Beispiel in der Kunststoffverarbeitung dazu verwandt, um Kunststoffmaterial bzw. Fluid oder auch Extrusionsschmelze aus verschiedenen Extrudern miteinander zu Coextrudieren.

Das Dokument US 2012/073687 A1 offenbart ein Umschaltventil, das die Eingabe von zwei verschiedenen extrudierten Materialien in eine Form steuert. Ein Ventilkörper hat eine sich axial erstreckende Öffnung, und ein Ventil-kolben ist in der Öffnung zwischen der ersten und der zweiten Position axial beweglich. Der Körper definiert einen ersten Einlass zum Aufnehmen eines ersten Materials und einen zweiten Einlass zum Aufnehmen eines zweiten Materials mit ersten und zweiten Auslässen gegenüber den Einlassen.

Dokument EP 3 308 939 A1 zeigt einen Strömungsumlenker für eine Extrusionsdüse, der einen Körper mit einer Außenfläche, einer länglichen Öffnung, die sich entlang einer ersten Achse erstreckt, einen Satz von Eingangskanälen, die sich von der Außenfläche durch den Körper zu der länglichen Öffnung erstrecken, und einen Satz von Ausgangskanälen umfasst, die sich durch den Körper von der länglichen Öffnung zur Außenfläche erstrecken.

Dokument JP S61 273924 A beschreibt das Umschalten eines Strömungsweges durch Drehen eines Wahlstopfens in dessen Umfangsrichtung durch ein Verfahren, bei dem ein Startpunkt und ein Endpunkt des Strömungsweges an Positionen vorgesehen sind, die von dem jeweiligen Start- und Endpunkt verschoben sind.

Bei bekannten Verteilerblöcken werden Verteilerkerne verwendet, um Kanäle im Verteilerblock zu verbinden und Kunststoffmaterial bzw. Fluid aus verschiedenen Extrudern miteinander zu Coextrudieren. Hierbei bestimmen unteranderem die Verteilerkerne wie das Kunststoffmaterial bzw. Fluid aus den verschiedenen, an den Verteilerblock angeschlossenen, Extrudern coextrudiert wird. Die Verteilerkerne sind in den Verteilerblock eingesetzt und mit diesem verbunden. Für unterschiedliches Coextrudieren müssen unterschiedliche Verteilerkerne manuell eingesetzt werden. Dies wirkt sich z.B. nachteilig auf die Rüstzeit solcher Anlagen aus.

Aufgabe der vorliegenden Anmeldung war es, die Nachteile des Standes der Technik zu überwinden und eine Vorrichtung und ein Verfahren zur Verfügung zu stellen, mittels derer ein Benutzer in der Lage ist eine Reduzierung der Rüstzeit zu realisieren.

Diese Aufgabe wird durch eine Vorrichtung und ein Verfahren gemäß den beigefügten unabhängigen Ansprüchen gelöst.

Eine anmeldungsgemäße Vorrichtung betrifft einen Verteilerblock für Extrusionsschmelze. Dieser Verteilerblock für Extrusionsschmelze umfasst einen Grundkörper und zumindest eine Pinole. Der Grundkörper und die zumindest eine Pinole weisen kommunizierende Fluidkanäle auf. Weiterhin ist die zumindest eine Pinole beweglich im Grundkörper gelagert. Weiterhin ist die zumindest eine Pinole bezüglich dem Grundkörper in einer ersten Position positionierbar, um eine erste Gruppe von Fluidkanälen der zumindest einen Pinole mit Fluidkanälen des Grundkörpers in Kommunikation zu bringen. Dies kann von Vorteil sein, weil durch die Beweglichkeit der zumindest einen Pinole bezüglich des Grundkörpers, die zumindest eine Pinole in die erste Position gebracht werden kann. Mit anderen Worten kann vorteilhafterweise eine schaltbare Pinole erlangt werden. Eine Pinole im Umfang der vorliegenden Anmeldung wird als ein im Wesentlichen um eine Längsachse rotationssymmetrischer Körper verstanden. In diesen Körper sind unter anderem Fluidkanäle eingebracht. Der Körper bzw. die Pinole kann weiterhin nichtsymmetrische Abschnitte aufweisen.

Gemäß einem weiteren Aspekt der vorliegenden Anmeldung kann bei einem Verteilerblock für Extrusionsschmelze die zumindest eine Pinole bezüglich dem Grundkörper in einer zweiten Position positionierbar sein, um eine zweite Gruppe von Fluidkanälen der zumindest einen Pinole mit den Fluidkanälen des Grundkörpers in Kommunikation zu bringen. Dies kann von Vorteil sein, weil somit eine unterschiedliche Verteilung der Extrusionsschmelze bezüglich der ersten Position erlangt werden kann. Dies kann vorteilhafterweise die Flexibilität der Vorrichtung erhöhen.

Erfindungsgemäß ist bei dem Verteilerblock für Extrusionsschmelze zumindest ein Fluidkanal der ersten Gruppe von Fluidkanälen der zumindest einen Pinole dazu ausgelegt, auf einem anderen Temperaturniveau betrieben zu werden, als ein zweiter Fluidkanal der ersten Gruppe von Fluidkanälen der zumindest einen Pinole. Dies kann von Vorteil sein, weil so in den unterschiedlichen Fluidkanälen unterschiedliche Fluide bei ihrer optimalen Temperatur geleitet werden.

Erfindungsgemäß sind außerdem bei dem Verteilerblock für Extrusionsschmelze die Fluidkanäle einer Gruppe von Fluidkanälen der zumindest einen Pinole thermisch zueinander isoliert. Gemäß einem weiteren Aspekt können sie individuell beheizbar sein.

Dies kann von Vorteil sein, weil sich somit unterschiedliche Fluide bei unterschiedlichen Temperaturen in den unterschiedlichen Fluidkanälen geleitet werden, weil die einzelnen Kanälen aufeinander bezüglich ihrer Temperatur keinen Einfluss haben.

Gemäß einem weiteren Aspekt der vorliegenden Anmeldung kann bei einem Verteilerblock für Extrusionsschmelze die zumindest eine Pinole linear verschieblich entlang ihrer Längsachse und/oder drehbar bezüglich ihrer Längsachse im Grundkörper gelagert sein. Dies kann von Vorteil sein, weil die zumindest eine Pinole somit effizient und/oder frei wählbar im Grundkörper bewegt werden kann.

Gemäß einem weiteren Aspekt der vorliegenden Anmeldung kann bei einem Verteilerblock für Extrusionsschmelze die zumindest eine Pinole motorisch bewegbar sein. Dies kann von Vorteil sein, weil die zumindest eine Pinole somit ferngesteuert und/oder automatisch bewegt werden kann. Ein motorischer Antrieb kann z.B. elektrisch, hydraulisch, pneumatisch oder eine beliebige Kombination hiervon erfolgen. Eine Arretierung bzw. Verriegelung der Pinole in einer der Positionen kann über eine separate Arretiervorrichtung erfolgen oder durch den motorischen Antrieb.

Gemäß einem weiteren Aspekt der vorliegenden Anmeldung weist bei einem Verteilerblock für Extrusionsschmelze die zumindest eine Pinole Dichtabschnitte auf. Dies kann von Vorteil sein, weil somit ein Austreten von Fluid aus der zumindest einen Pinole verhindert werden kann.

Gemäß einem weiteren Aspekt der vorliegenden Anmeldung können bei einem Verteilerblock für Extrusionsschmelze die Fluidkanäle in der zumindest einen Pinole und dem Grundkörper bezüglich einander durch Bewegung der Pinole in eine Spülstellung gebracht werden können. Dies kann von Vorteil sein, weil somit ein in den Fluidkanälen vorhandenes Fluid entfernt oder auch durch ein anderes ersetzt werden kann.

Gemäß einem weiteren Aspekt der vorliegenden Anmeldung kann bei einem Verteilerblock für Extrusionsschmelze die zumindest eine Pinole aus dem Grundkörper an beiden Enden herausstehen. Dies kann von Vorteil sein, weil somit viele Fluidkanäle in der zumindest einen Pinole vorgesehen werden können. Weiterhin kann dies vorteilhaft sein, weil somit zum Beispiel mehre Positionen der zumindest einen Pinole realisiert werden können.

Gemäß einem weiteren Aspekt der vorliegenden Anmeldung kann bei einem Verteilerblock für Extrusionsschmelze die zumindest eine Pinole im Wesentlichen kegelförmig sein. Dies kann von Vorteil sein, weil somit z.B. ein Dichtsitz der zumindest einen Pinole im Grundkörper verbessert werden kann.

Gemäß einem weiteren Aspekt der vorliegenden Anmeldung kann ein anmeldungsgemäßer Verteilerblock für Extrusionsschmelze mehrere Pinolen umfassen. Dies kann von Vorteil sein, weil so zusätzliche Extruder an den Verteilerblock angeschlossen werden können.

Erfindungsgemäß umfasst ein Verfahren zum Coextrudieren von Folien mit Hilfe des genannten Verteilerblocks für Extrusionsschmelze die Schritte von Verbinden von Extrudern mit dem Verteilerblock für Extrusionsschmelze, das Positionieren von zumindest einer Pinole in einer ersten Position, sodass Fluidkanäle in einem Grundkörper des Verteilerblock für Extrusionsschmelze mit Fluidkanälen in der zumindest einen Pinole kommunizieren, ein erstes Coextrudieren, das Verstellen der zumindest einen Pinole bezüglich dem Grundkörper in eine zweite Position, sodass andere Fluidkanäle kommunizieren und ein zweites Coextrudieren. Dies kann von Vorteil sein, da mit derselben zumindest einen Pinole zwei verschiedene Coextrusionen vorgenommen werden können. Dies kann vorteilhafterweise die Effizienz des Verteilerblocks erhöhen, da zum Beispiel keine andere Pinole eingebaut bzw. die Pinole nicht zeitaufwändig gewechselt werden muss.

Das Verfahren umfasst weiterhin das Steuern der Temperatur von zumindest einem von dem Grundkörper, der zumindest einen Pinole oder den Fluidkanälen in Grundkörper und/oder der zumindest einen Pinole.

Dies kann von Vorteil sein, weil somit ein Fluid in dem Verteilerblock, der zumindest einen Pinole oder einem Fluidkanal bei seiner optimalen Temperatur geleitet werden kann.

Gemäß einem weiteren Aspekt der vorliegenden Anmeldung kann bei einem Verfahren das Steuern der Temperatur abhängig von der Position der zumindest einen Pinole sein. Dies kann von Vorteil sein, weil es somit möglich ist für unterschiedliche Coextrusionen unterschiedliche Temperaturen zu verwenden und damit die Qualität der Coextrusionen zu steigern.

Gemäß einem weiteren Aspekt der vorliegenden Anmeldung kann das Verfahren ein Spülen nach dem ersten Coextrudieren und vor dem Positionieren in der zweiten Position umfassen. Dies kann von Vorteil sein, weil somit Fluid von der ersten Coextrusion aus den Fluidkanälen entfernt werden kann, bevor die zweite Coextrusion stattfindet. Weiterhin alternativ kann das Spülen nach dem Positionieren in die zweite Position erfolgen. Somit kann beim Spülen bereits das Fluid der zweiten Position verwendet werden.

Die obigen Aspekte können beliebig miteinander kombiniert werden und insbesondere können Verfahrensaspekte zur Coextrusion in Aspekte des Verteilerblocks überführt werden und vice versa.

Zum besseren Verständnis der Anmeldung wird diese anhand der nachfolgenden Figuren näher erläutert.

Es zeigen jeweils in stark vereinfachter, schematischer Darstellung:
- Fig. 1: eine Schnittansicht eines Verteilerblock mit einer Pinole gemäß eines ersten Ausführungsbeispiels;
- Fig. 2: eine perspektivische Ansicht einer Pinole gemäß eines ersten Ausführungsbeispiels;
- Fig. 3: eine Schnittansicht eines Verteilerblock mit einer Pinole gemäß eines zweiten Ausführungsbeispiels;
- Fig. 4: eine perspektivische Ansicht einer Pinole gemäß eines zweiten Ausführungsbeispiels.

Einführend sei festgehalten, dass in den unterschiedlich beschriebenen Ausführungsbeispielen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

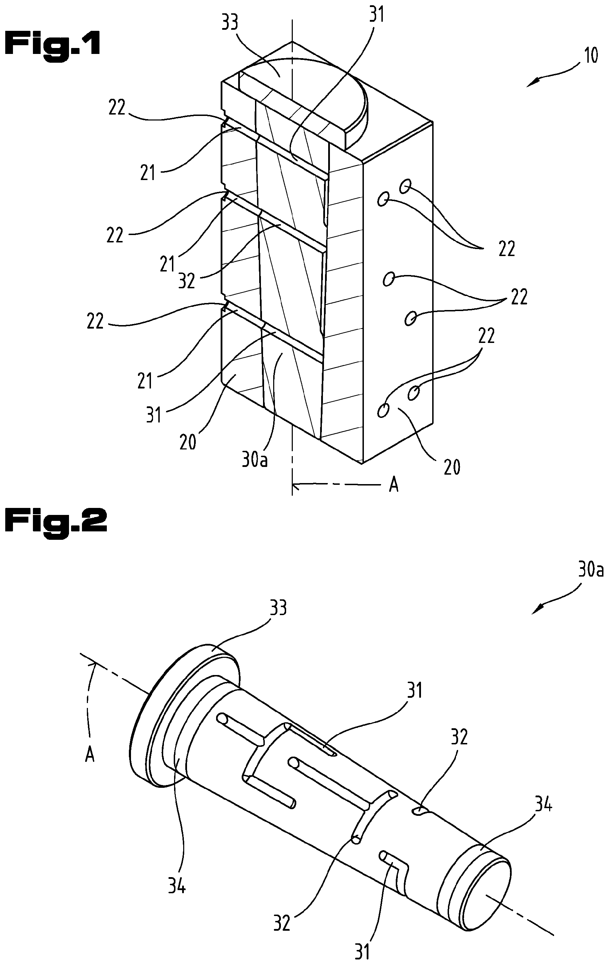

Es wird anfänglich auf Fig. 1 Bezug genommen, wobei Fig. 1 einen Verteilerblock 10 für Extrusionsschmelze offenbart. Der Verteilerblock 10 umfasst einen Grundkörper 20 in welchen eine Pinole 30a eingesetzt ist. Grundkörperports 22 an den Außenseiten des Grundkörpers 20 sind mit Grundkörperfluidkanälen 21 im Grundkörper 20 verbunden und reichen an eine Aufnahmeöffnung heran, in welche die Pinole 30a eingesetzt ist. An die Grundkörperports 22 können Extruder und/oder Werkzeuge (z.B. Folienwerkzeuge) angeschlossen werden.

Wie in Fig. 2 zu sehen, ist die Pinole 30a ein im Wesentlichen konisch zulaufender Körper, der im Wesentlichen rotationssymmetrisch entlang seiner Längsachse A ist. Die Pinole 30a weist einen Flansch 33 auf, über welchen die Pinole 30a im Grundkörper 20 um ihre Längsachse A gedreht werden kann. Die Pinole 30a verjüngt sich vom Flansch 33 entlang der Längsachse A und ist somit im Wesentlichen kegelförmig. Die Pinole 30a kann auch zylindrisch sein und damit die Aufnahmeöffnung im Grundkörper 20 ebenso. Die Pinole 30a ist in Fig. 1 als unten mit dem Grundkörper 20 abschließend dargestellt. Die Pinole 30a kann unten auch über den Grundkörper 20 herausstehen.

Die Pinole 30a weist erste Fluidkanäle 31 und zweite Fluidkanäle 32, sowie Dichtabschnitte 34 auf. Die Dichtabschnitte 34 verhindern ein Austreten von Fluid entlang der Längsachse A in beide Richtungen. Die ersten und zweiten Fluidkanäle 31 und 32 der Pinole 30a sind dazu vorgesehen die in Fig. 1 auf der linken und rechten Seite des Grundköpers 20 gezeigten Grundkörperports 22 mit den in den Grundkörper 20 reichenden Grundkörperfluidkanälen 21 zu verbinden bzw. in Kommunikation zu bringen.

In einer ersten Position (nicht gezeigt) verbinden bzw. kommunizieren die ersten Fluidkanäle 31 die Grundkörperports 22 und Grundkörperfluidkanäle 21 auf der rechten Seite des Grundkörpers 20 in Fig. 1 mit den Grundkörperfluidkanäle 21 und Grundkörperports 22 auf der linken Seite des Grundkörpers 20. Wenn die Pinole 30a über den Flansch 33 z.B. motorisch um die Längsachse A gedreht wird, dann verbinden bzw. kommunizieren die zweiten Fluidkanäle 32 andere von den Grundkörperports 22 und Grundkörperfluidkanäle 21 auf der rechten Seite des Grundkörpers 20 in Fig. 1 mit anderen von den Grundkörperfluidkanälen 21 und Grundkörperports 22 auf der linken Seite des Grundkörpers 20.

Wenn angenommen wird, dass z.B. mehrere Extruder an den Grundkörperports 22 auf der rechten Seite des Grundkörpers 20 in Fig. 1 angeschlossen sind, dann können über die ersten und zweiten Fluidkanäle 31 und 32 (Gruppen von Fluidkanälen) der Pinole die Fluid- bzw. Materialströme dieser Extruder auf beliebige der Grundkörperports 22 auf der linken Seite des Grundkörpers 20 geleitet werden. Die Anordnung der ersten und zweiten Fluidkanäle 31 und 32 an der Pinole 30a bestimmt über den Weg, den der Fluid- bzw. Materialstrom von den Extrudern durch den Grundkörper 20 und die Pinole 30a nimmt. In dem in Fig. 1 und 2 dargestellten Ausführungsbeispiel wird durch Drehen der Pinole 30a von der ersten Position, in welcher die ersten Fluidkanäle 31 durchströmt werden, in die zweite Position, in welcher die zweiten Fluidkanäle 32 durchströmt werden, die Fluid- bzw. Materialströme im Verteilblock 10 geändert.

Selbstverständlich können weitere Fluidkanäle und damit Positionen vorgesehen werden. Zwar sind in der Schnittdarstellung der Fig. 1 die Pinolenfluidkanäle 31 und 32 zu sehen, aber dies bedeutet nicht, dass notwendigerweise die Pinolenfluidkanäle 31 und 32 gleichzeitig in einer der Positionen das Fluid leiten. Jedoch ist es möglich, dass ein Pinolenfluidkanal in der ersten Position eine bestimmte Verbindung zwischen zwei Grundkörperports 22 herstellt und in der zweiten Position derselbe Pinolenfluidkanal eine andere Verbindung zwischen zwei Grundkörperports 22 herstellt.

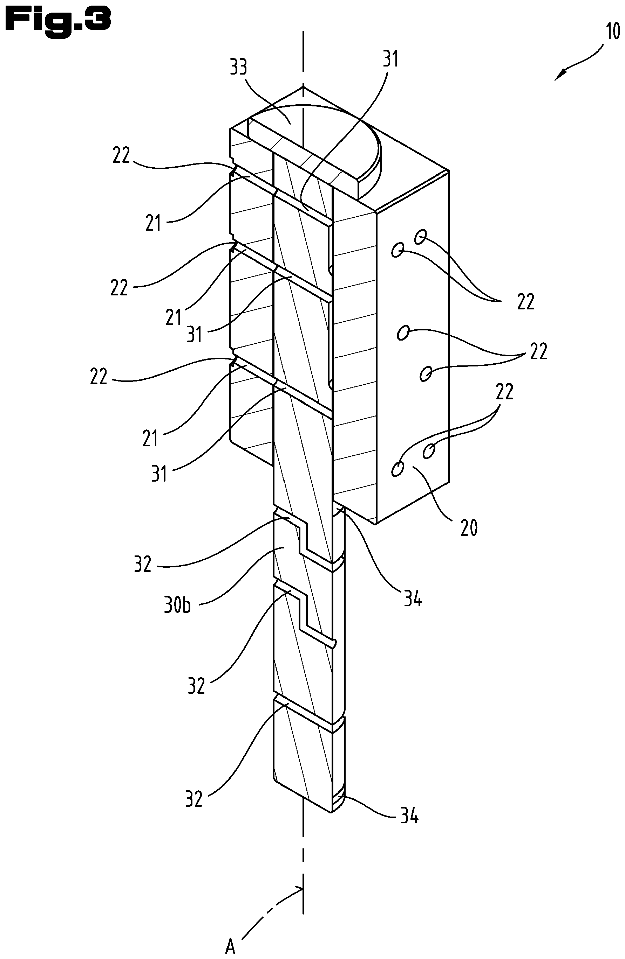

In der Fig. 3 ist ein weiteres Ausführungsbeispiel des Verteilerblocks gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

In Fig. 3 wird ein Verteilerblock 10 für Extrusionsschmelze offenbart. Der Verteilerblock 10 umfasst einen Grundkörper 20 in welchen eine Pinole 30b eingesetzt ist. Grundsätzlich entspricht der Verteilerblock 10 in Fig. 3 dem Verteilerblock 10 in Fig. 1, daher wird nur auf die Unterscheide eingegangen. Die Pinole 30b steht in Fig. 3 unten aus dem Grundkörper 20 heraus und ist zylindrisch, nicht konisch wie im Falle des ersten Ausführungsbeispiels der Fig. 1 und 2. Der Grundkörper 20 der Fig. 3 weist ebenso Grundkörperfluidkanäle 21 und Grundkörperports 22 auf.

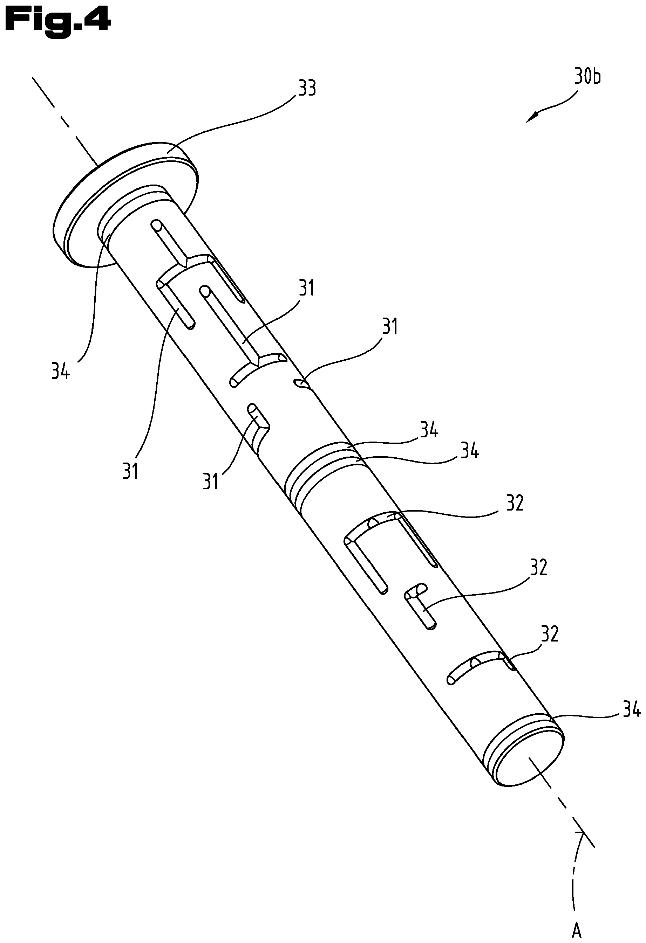

Das in Fig. 3 und 4 dargestellte Ausführungsbeispiel offenbart die Pinole 30b mit zwei Positionen, wobei in Fig. 3 die erste Position dargestellt ist, bei welcher erste Pinolenfluidkanäle 31 (Gruppe von Fluidkanäle) die Grundkörperports 22 und Grundkörperfluidkanäle 21 der rechten Seite des in Fig. 3 gezeigten Grundkörpers 20 mit denen der linken Seite verbinden und damit Fluid bzw. Extrusionsschmelze entsprechend leiten.

Wenn die Pinole 30b nun in die zweite Position gebracht werden soll, dann wird die Pinole 30b parallel zu ihrer Längsachse A nach oben in der Fig. 3 verschoben, sodass die zweiten Pinolenfluidkanäle 32 (Gruppe von Fluidkanäle) die Grundkörperports 22 und Grundkörperfluidkanäle 21 der rechten Seite des in Fig. 3 gezeigten Grundkörpers 20 mit denen der linken Seite verbinden bzw. in Kommunikation bringen und damit Fluid bzw. Extrusionsschmelze entsprechend unterschiedlich als in der ersten Position leiten. Wahlweise kann die Pinole 30b zusätzlich gedreht werden und somit z.B. zwei Verfahrpositionen und in diesen Verfahrpositionen zwei Verdrehpositionen erlangt werden, was in diesem Falle vier unterschiedliche Positionen bedeuten würde. Dies wäre dann eine Kombination einer Variante des ersten Ausführungsbeispiels mit zylindrischer Pinole und des hier beschriebenen zweiten Ausführungsbeispiels.

In Fig. 3 und 4 sind die Dichtabschnitte 34 zu sehen, welche die Pinolenfluidkanäle 31 und 32 parallel zur Längsachse A abdichten. Dabei werden die Pinolenfluidkanäle 31 bzw. 32 jeweils voneinander durch ein Paar Dichtabschnitte 34 abgegrenzt. Es kann auch eine Konfiguration gewählt werden, bei welcher zwischen den Pinolenfluidkanäle 31 und 32 nicht zwei Dichtabschnitte 34 wie in Fig. 3 und 4 angeordnet sind, sondern nur ein Dichtabschnitt 34. Weiterhin weist die Pinole 30b ebenso einen Flansch 33 auf, der zur motorischen Bewegung der Pinole 30b und als Anschlag dient.

Für beide Ausführungsbeispiele gilt, dass die Pinolenfluidkanäle einen Fluidstrom, der von einem einzelnen Grundkörperport kommt aufteilen können und auf zwei oder mehrere Grundkörperports leiten. Andersherum kann ein Fluidstrom, der von zwei oder mehreren Grundkörperports kommt durch Pinolenfluidkanäle auf einen Grundkörperport zusammengeführt werden.

Die Pinolenfluidkanäle können beliebige Grundkörperports stromaufwärts der Pinole mit beliebigen Grundkörperports stromabwärts der Pinole verbinden. Die Verbindung wird durch die individuelle und beliebige Ausgestaltung der Pinolenfluidkanäle bestimmt.

Die Pinolen und oder Grundkörper können Spülkanäle und/oder Spülports aufweisen, sodass Material bzw. Fluid, welches noch in den Fluidkanälen des Verteilerblocks von einem Coextrudieren vorhanden ist ausgespült werden kann bevor ein anderes Coextrudieren durchgeführt wird. Dies kann in der ersten Position der Pinole, in der zweiten Position der Pinole oder in einer Spülposition der Pinole geschehen.

Zumindest eines von den Fluidkanäle, der Pinole oder dem Grundkörper kann beheizt werden. Weiterhin können die Fluidkanäle separat von einander auf unterschiedliche Temperaturen beheizt werden. Weiterhin können die Fluidkanäle in der Pinole und/oder im Grundkörper thermisch voneinander getrennt sein.

Die Fig. 1 und 3 zeigen auf der rechten Seite keine Grundkörperfluidkanäle 21, weil diese zufällig nicht in der Schnittebene liegen. Jedoch verbinden auf der linken Seite der Fig. 1 und 3 Grundkörperfluidkanäle 21 die Grundkörperports 22 mit den Pinolenfluidkanälen 31 bzw. 32.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenliste

- 10: Verteilerblock
- 20: Grundkörper
- 21: Grundkörperfluidkanal
- 22: Grundkörperport
- 30a: Pinole
- 30b: Pinole
- 31: erster Pinolenfluidkanal
- 32: zweiter Pinolenfluidkanal
- 33: Flansch
- 34: Dichtabschnitt
- A: Längsachse

## Patentansprüche

1. Verteilerblock (10) für Extrusionsschmelze, umfassend einen Grundkörper (20) und zumindest eine Pinole (30a, 30b),
wobei der Grundkörper und die zumindest eine Pinole (30a, 30b) kommunizierende Fluidkanäle (21, 31, 32) aufweisen,
wobei die zumindest eine Pinole (30a, 30b) beweglich im Grundkörper (20) gelagert ist,
wobei die zumindest eine Pinole (30a, 30b) bezüglich dem Grundkörper (20) in einer ersten Position positionierbar ist, um eine erste Gruppe von Fluidkanälen (31) der zumindest einen Pinole (30a, 30b) mit Fluidkanälen (21) des Grundkörpers (20) in Kommunikation zu bringen,
**dadurch gekennzeichnet,**
**dass** zumindest ein Fluidkanal der ersten Gruppe von Fluidkanälen der zumindest einen Pinole (30a, 30b) dazu ausgelegt ist, auf einem anderen Temperaturniveau betrieben zu werden als ein zweiter Fluidkanal der ersten Gruppe von Fluidkanälen (31) der zumindest einen Pinole (30a, 30b), und
**dass** die Fluidkanäle einer Gruppe von Fluidkanälen der zumindest einen Pinole (30a, 30b) thermisch zueinander isoliert sind.

2. Verteilerblock (10) für Extrusionsschmelze nach Anspruch 1 wobei die zumindest eine Pinole (30a, 30b) bezüglich dem Grundkörper (20) in einer zweiten Position positionierbar ist, um eine zweite Gruppe von Fluidkanälen (32) der zumindest einen Pinole mit den Fluidkanälen (21) des Grundkörpers (20) in Kommunikation zu bringen.

3. Verteilerblock (10) für Extrusionsschmelze nach Anspruch 1 oder 2, bei welchem die zumindest eine Pinole (30a; 30b) linear verschieblich entlang ihrer Längsachse und/oder drehbar bezüglich ihrer Längsachse im Grundkörper gelagert ist.

4. Verteilerblock (10) für Extrusionsschmelze nach Anspruch 3, bei welchem die zumindest eine Pinole (30a, 30b) motorisch bewegbar ist.

5. Verteilerblock (10) für Extrusionsschmelze nach einem der vorangegangenen Ansprüche, bei welchem die zumindest eine Pinole (30a, 30b) Dichtabschnitte (34) aufweist.

6. Verteilerblock (10) für Extrusionsschmelze nach einem der vorangegangenen Ansprüche, wobei die Fluidkanäle (21, 31, 32) in der zumindest einen Pinole (30a, 30b) und dem Grundkörper (20) bezüglich einander durch Bewegung der Pinole in eine Spülstellung gebracht werden können.

7. Verteilerblock (10) für Extrusionsschmelze nach einem der vorangegangenen Ansprüche, wobei die zumindest eine Pinole (30a, 30b) aus dem Grundkörper (20) an beiden Enden heraussteht.

8. Verteilerblock (10) für Extrusionsschmelze nach einem der Ansprüche 1 bis 6, bei welchem die zumindest eine Pinole (30a) im Wesentlichen kegelförmig ist.

9. Verfahren zum Coextrudieren von Folien mit Hilfe eines Verteilerblocks (10) für Extrusionsschmelze, umfassend die Schritte von
Verbinden von Extrudern mit dem Verteilerblock (10) für Extrusionsschmelze,
Positionieren von zumindest einer Pinole (30a, 30b) in einer ersten Position, sodass Fluidkanäle (21) in einem Grundkörper (20) des Verteilerblocks (10) für Extrusionsschmelze mit Fluidkanälen (31) in der zumindest einen Pinole (30a, 30b) kommunizieren,
ein erstes Coextrudieren, Verstellen der zumindest einen Pinole (30a, 30b) bezüglich dem Grundkörper (20) in eine zweite Position, sodass andere Fluidkanäle (32) kommunizieren,
ein zweites Coextrudieren,
wobei das Verfahren das Steuern der Temperatur von zumindest einem von dem Grundkörper (20), der zumindest einen Pinole (30a, 30b) oder den Fluidkanälen (21, 31, 32) im Grundkörper (20) und/oder der zumindest einen Pinole (30a, 30b) umfasst,
**dadurch gekennzeichnet,**
**dass** die Fluidkanäle einer Gruppe von Fluidkanälen der zumindest einen Pinole (30a, 30b) thermisch zueinander isoliert sind werden, und
**dass** das Steuern der Temperatur abhängig ist von der Position der zumindest einen Pinole (30a, 30b).

10. Verfahren nach Anspruch 9, weiterhin umfassend ein Spülen nach dem ersten Coextrudieren und vor dem Positionieren in der zweiten Position.

## Claims

1. A distribution block (10) for extrusion melt, comprising a base body (20) and at least one sleeve (30a, 30b),
wherein the base body and the at least one sleeve (30a, 30b) have communicating fluid channels (21, 31, 32),
wherein the at least one sleeve (30a, 30b) is mounted in the base body (20) so as to be movable,
wherein the at least one sleeve (30a, 30b) may be positioned in a first position in relation to the base body (20), so as to bring a first group of fluid channels (31) of the at least one sleeve (30a, 30b) in communication with fluid channels (21) of the base body (20),
**characterized in that**
at least one fluid channel of the first group of fluid channels of the at least one sleeve (30a, 30b) is configured to be operated at a different temperature level than a second fluid channel of the first group of fluid channels (31) of the at least one sleeve (30a, 30b), and
the fluid channels of a group of fluid channels of the at least one sleeve (30a, 30b) are thermally insulated from one another.

2. The distribution block (10) for extrusion melt according to claim 1, wherein the at least one sleeve (30a, 30b) may be positioned in a second position in relation to the base body (20), so as to bring a second group of fluid channels (32) of the at least one sleeve in communication with the fluid channels (21) of the base body (20).

3. The distribution block (10) for extrusion melt according to claim 1 or 2, in which the at least one sleeve (30a; 30b) is mounted in the base body so as to be linearly displaceable along its longitudinal axis and/or rotatable in relation to its longitudinal axis.

4. The distribution block (10) for extrusion melt according to claim 3, in which the at least one sleeve (30a, 30b) is movable by motor.

5. The distribution block (10) for extrusion melt according to one of the preceding claims, in which the at least one sleeve (30a, 30b) comprises sealing sections (34).

6. The distribution block (10) for extrusion melt according to one of the preceding claims, wherein the fluid channels (21, 31, 32) in the at least one sleeve (30a, 30b) and the base body (20) may be brought into a rinsing position in relation to one another by movement of the sleeve.

7. The distribution block (10) for extrusion melt according to one of the preceding claims, wherein the at least one sleeve (30a, 30b) protrudes from the base body (20) on both ends.

8. The distribution block (10) for extrusion melt according to one of claims 1 to 6, in which the at least one sleeve (30a) is essentially conical.

9. A method for coextruding films with the aid of a distribution block (10) for extrusion melt, comprising the steps of
connecting extruders to the distribution block (10) for extrusion melt,
positioning at least one sleeve (30a, 30b) in a first position, such that fluid channels (21) in a base body (20) of the distribution block (10) for extrusion melt communicate with fluid channels (31) in the at least one sleeve (30a, 30b),
a first coextrusion, adjusting the at least one sleeve (30a, 30b) to a second position in relation to the base body (20), such that other fluid channels (32) communicate,
a second coextrusion, wherein the method comprises controlling of the temperature of at least one of the base body (20), the at least one sleeve (30a, 30b) or the fluid channels (21, 31, 32) in the base body (20) and/or the at least one sleeve (30a, 30b),
**characterized in that**
the fluid channels of a group of fluid channels of the at least one sleeve (30a, 30b) are thermally insulated from one another, and
controlling the temperature depends on the position of the at least one sleeve (30a, 30b).

10. The method according to claim 9, further comprising rinsing after the first coextrusion and prior to positioning in the second position.

## Revendications

1. Bloc de distributeur (10) pour fonte d'extrusion, comprenant un corps de base (20) et au moins une broche (30a, 30b),
dans lequel le corps de base et l'au moins une broche (30a, 30b) comprennent des canaux de fluides communicants (21, 31, 32),
dans lequel l'au moins une broche (30a, 30b) est logée de manière mobile dans le corps de base (20),
dans lequel l'au moins une broche (30a, 30b) peut être positionnée par rapport au corps de base (20) dans une première position, afin de mettre en communication un premier groupe de canaux de fluides (31) de l'au moins une broche (30a, 30b) avec des canaux de fluides (21) du corps de base (20),
**caractérisé en ce que**
au moins un canal de fluide du premier groupe de canaux de fluides de l'au moins une broche (30a, 30b) est conçu pour fonctionner à un niveau de température différent d'un deuxième canal de fluide du premier groupe de canaux de fluides (31) de l'au moins une broche (30a, 30b) et
les canaux de fluides d'un groupe de canaux de fluides de l'au moins une broche (30a, 30b) sont isolés thermiquement entre eux.

2. Bloc de distributeur (10) pour fonte d'extrusion selon la revendication 1, dans lequel l'au moins une broche (30a, 30b) peut être positionnée par rapport au corps de base (20) dans une deuxième position afin de mettre en communication un deuxième groupe de canaux de fluides (32) de l'au moins une broche avec les canaux de fluides (21) du corps de base (20),

3. Bloc de distributeur (10) pour fonte d'extrusion selon la revendication 1 ou 2, dans lequel l'au moins une broche (30a, 30b) est logée dans le corps de base de manière coulissante linéairement le long de son axe longitudinal et/ou de manière rotative par rapport à son axe longitudinal.

4. Bloc de distributeur (10) pour fonte d'extrusion selon la revendication 3, dans lequel l'au moins une broche (30a, 30b) peut être déplacée grâce à un moteur.

5. Bloc de distributeur (10) pour fonte d'extrusion selon l'une des revendications précédentes, dans lequel l'au moins une broche (30a, 30b) comprend des sections étanches (34).

6. Bloc de distributeur (10) pour fonte d'extrusion selon l'une des revendications précédentes, dans lequel les canaux de fluides (21, 31, 32) de l'au moins une broche (30a, 30b) et du corps de base (20) peuvent être mis, les uns par rapport aux autres, dans une position de rinçage, par le déplacement de la broche.

7. Bloc de distributeur (10) pour fonte d'extrusion selon l'une des revendications précédentes, dans lequel l'au moins une broche (30a, 30b) dépasse du corps de base (20) aux deux extrémités.

8. Bloc de distributeur (10) pour fonte d'extrusion selon l'une des revendications 1 à 6, dans lequel l'au moins une broche (30a) présente globalement une forme conique.

9. Procédé de coextrusion de feuilles à l'aide d'un bloc de distributeur (10) pour une fonte d'extrusion, comprenant les étapes suivantes :
raccordement d'extrudeuses avec le bloc de distributeur (10) pour la fonte d'extrusion,
positionnement d'au moins une broche (30a, 30b) dans une première position, de façon à ce que des canaux de fluide (21) d'un corps de base (20) du bloc de distributeur (10) pour fonte d'extrusion communiquent avec des canaux de fluides (31) de l'au moins une broche (30a, 30b),
une première coextrusion,
déplacement de l'au moins une broche (30a, 30b) par rapport au corps de base (20) vers une deuxième position, de façon à ce que d'autres canaux de fluides (32) communiquent,
une deuxième coextrusion,
dans lequel le procédé comprend le contrôle de la température d'au moins un élément parmi le corps de base (20), l'au moins une broche (30a, 30b) ou les canaux de fluides (21, 31, 32) du corps de base (20) et/ou l'au moins une broche (30a, 30b),
**caractérisé en ce que**
les canaux de fluides d'un groupe de canaux de fluides de l'au moins une broche (30a, 30b) sont isolés thermiquement entre eux et
le contrôle de la température dépend de la position de l'au moins une broche (30a, 30b).

10. Procédé selon la revendication 9, comprenant en outre un rinçage selon la première coextrusion et avant le positionnement dans la deuxième position.
